# EUROPEAN PATENT SPECIFICATION

(11) **EP 3 847 674 B1**
(45) Date of publication and mention of the grant of the patent: **23.10.2024**
(21) Application number: 19782465.9
(22) Date of filing: 03.09.2019
(51) Int. Cl.: G21C 9/06, F16K 24/00, G21C 19/303

(54) **METHOD FOR REMOVAL OF A STEAM-GAS MIXTURE CONTAINING AT LEAST ONE NON-CONDENSABLE GAS, ESPECIALLY HYDROGEN, AND STEAM FROM A PRESSURE SYSTEM TECHNOLOGY AND AN EQUIPMENT FOR SUCH REMOVAL**
VERFAHREN ZUR ENTFERNUNG EINES DAMPFGASGEMISCHES MIT MINDESTENS EINEM NICHTKONDENSIERBAREN GAS, INSBESONDERE EINEM WASSERSTOFF, UND DAMPF AUS EINER DRUCKSYSTEMTECHNIK UND AUSRÜSTUNG ZUR DURCHFÜHRUNG DES VERFAHRENS
PROCÉDÉ D'ÉLIMINATION D'UN MÉLANGE VAPEUR-GAZ CONTENANT AU MOINS UN GAZ NON CONDENSABLE (NOTAMMENT DE L'HYDROGÈNE) ET DE LA VAPEUR D'EAU ISSUE D'UN SYSTÈME DE PRESSION, ET ÉQUIPEMENT ASSOCIÉ

(30) Priority: 07.09.2018 CZ 20180453
(43) Date of publication of application: 14.07.2021
(73) Proprietor: Skoda JS a.s., 316 00 Plzen (CZ)
(72) Inventor: PULC, Martin, 316 00 Plzen, Bolevec (CZ); SLACH, Jiri, 316 00 Plzen, Bolevec (CZ); KOSTKA, Pavel, 316 00 Plzen, Bolevec (CZ)
(74) Representative: Pavlica, Tomas
(86) International application number: PCT/CZ2019/000043
(87) International publication number: WO 2020/048554

(56) References cited:
- GB-A- 336 095
- JP-A- 2009 192 298
- US-A1- 2013 129 034

## Description

### Field of the invention

The invention deals with a method and an equipment for a removal of a steam-gas mixture containing at least one non-condensable gas which is generated in a pressure system and which has to be removed, as defined in appended claims 1 and 4. Both the method and the equipment according to the invention are used to increase the safety in the pressure system. Especially advantageously, the invention deals with an equipment for a hydrogen removal from a primary circuit in a pressurized-water nuclear power plant to increase safety in the nuclear power plant in question.

### Background of the invention

In a number of pressure systems, undesirable non-condensable gases are generated. For instance, in pressurized water nuclear reactors, hydrogen is generated predominantly by a water radiolysis in a primary circuit of the active core as well as in chemical modes. Hydrogen generated in this way is dissolved in the primary circuit water and expelled in the form of bubbles in a place of the lowest pressure. In the primary circuit of a nuclear power plant, this place is mostly the water level in a pressurizer. Being a lightweight gas, hydrogen together with steam travels to the main safety valves located above the pressurizer to be separated there from the steam. If not removed, the hydrogen would form a cushion which:
1. forms a detonating gas which, if released, such as when opening the safety valves, may explode like it did in Fukushima nuclear power plant;
2. due to hydrogen being a very good thermally insulating element, causes thermal insulation, which means that if hydrogen is present upstream the pressurizer safety valves, these components get subcooled considerably to a temperature for which they have not been designed, with the consequent risk of failure or even damage.

A number of hydrogen removal system solutions have already been tested in the pressurized-water nuclear power plants, with all of them suffering considerable wear rate and an excessive number of non-condensable temperature cycles, whereby requiring frequent inspections and/or repairs.

For instance, hydrogen removal from the primary circuit of nuclear power plants is addressed in US2013129034 (A1), which describes a solution based on special valves controlled in dependence on temperature similarly as in thermostatic valves. If hydrogen occurring in the mixture is removed, the mixture cools down, causing the valve to open automatically. As soon as hydrogen is removed, the mixture temperature rises, causing the valve to close. The disadvantage of this solution is the critical pressure drop between the valve seat and plug which causes the seat to wear soon and to lose leaktightness as a result. Moreover, the valve cannot be controlled externally. Another system for hydrogen removal through orifices is known from patent document JP 2009 192298 A.

The above-mentioned disadvantages are resolved and reduced by the method and equipment for removal of the non-condensable gas from the pressure system according to this invention.

### Subject of invention

According to the first aspect of the present invention, a method is described for a removal of a steam-gas mixture consisting of at least one non-condensable gas and steam from a pressure system with a technology which separates the at least one non-condensable gas and steam from a pressure medium in a pressure system, wherein the pressure system includes at least two places of accumulation of the steam-gas mixture. According to the other aspect of the present invention equipment is described for a removal of a steam-gas mixture from the pressure system with a technology which includes at least two places of accumulation of the steam-gas mixture, making it possible to implement the above-mentioned method. For the purposes of this invention, the term "steam-gas mixture" means a mixture of at least one non-condensable gas and steam from the medium in the technology, while the term steam-gas mixture is also considered to be one where the proportion of steam according to the operating conditions of the particular technology can even be very small, such as approximately 1% only. It is, however, obvious that the proportion of steam in the steam-gas mixture being removed can also be considerably higher. In the method and equipment according to this invention, the place of steam-gas mixture accumulation also means the point of steam-gas mixture removal, and both terms can be used interchangeably in the present application. The place of accumulation/removal of the steam-gas mixture is always the highest point in a certain technology section where the steam-gas mixture accumulates because the non-condensable gas is lighter than the steam from the given pressure medium and, therefore, it rises upwards. The place of the steam-gas mixture accumulation is connected through interconnecting pipe with a collecting pipe through which the generated steam-gas mixture is let out of the technology. Between the place of the steam-gas mixture accumulation and the collecting pipe, the equipment according to the present invention is provided with a throttling measurement orifice plate installed to ensure a required pressure loss between the steam-gas mixture accumulation place from which it is removed and the collecting pipe, and the said throttling measurement orifice plate also provides the required flow-rate in each branch of the interconnecting pipe between the steam-gas mixture accumulation place and the collecting pipe and keeps the required proportion of the quantities of the steam-gas mixture through the individual interconnecting pipes. For the purposes of this application, the quantity of the steam-gas mixture is stated in kg/h and means the mass flow-rate of the steam-gas mixture through the interconnecting pipe or collecting pipe in question. The collecting pipe is installed lower than the lowest point of removal of the steam-gas mixture is, and there is an energy reducer installed in the equipment according to the present invention at the collecting pipe outlet, designed to let out the pre-defined quantity of steam-gas mixture. The pressure system technology as mentioned above means, for instance, piping where the non-condensable gas is separated and the said steam-gas mixture is generated, or a vessel where this phenomenon takes place, and so on. The required pressure loss is ensured by the throttling measurement orifice plate by designing the individual throttling measurement orifice plates in all the branches of the interconnecting pipe with a throttling diameter creating at least a ten times higher pressure loss in each throttling measurement orifice plate than the pressure loss of the interconnecting pipe with the highest pressure loss, and the throttling diameter of each throttling measurement orifice plate simultaneously ensures at least the required removal of the steam-gas mixture from the given place of accumulation of this steam-gas mixture and also the observance of the required proportions of quantities of the steam-gas mixture from the individual steam-gas mixture accumulation places. By the pressure loss at the throttling orifice plate being at least ten times higher than that in the pipe with the highest pressure loss, the pressure loss in the individual interconnecting pipes/branches does not depend, for instance, on the different length, diameter or shape of the interconnecting pipe but, especially, on the throttling measurement orifice plate, whereby it is secured for the purposes of this invention that the differences in the pressure losses in the individual pipes are essentially negligible in comparison with the pressure loss of the throttling measurement orifice plate and, therefore, need not be taken into account any more. Still more advantageously, the equipment according to the invention has a throttling measurement orifice plate sized for at least approximately 100 times higher pressure loss than that of the interconnecting pipe with the highest pressure loss, and even more advantageously a throttling measurement orifice plate sized for at least approximately 300 times higher pressure loss than that of the interconnecting pipe with the highest pressure loss, whereby ensuring that all the interconnecting pipes together with their respective throttling measurement orifice plates show in essence an equally high pressure loss against each other irrespective of the pressure losses of the individual interconnecting pipes because the pressure loss of the interconnecting pipe proper can be neglected. It is also necessary that each throttling measurement orifice plate ensures both the flow-rate of at least the required quantity of the steam-gas mixture from the relevant accumulation place and the observance of the mutual proportions of the steam-gas mixture quantities let out of the individual accumulation points. As in the nuclear power plant applications, the differences in the pressure losses of the individual interconnecting pipes are mostly similar, as is the quantity of the steam-gas mixture accumulated in the individual steam-gas mixture accumulation places, it is possible to use, advantageously, throttling measurement orifice plates of the same diameter for these applications for all interconnecting pipe branches. In some applications of the equipment according to this invention or where different flow-rates are required in the individual removal points, however, throttling measurement orifice plates of different orifice diameters may be required.

The equipment according to this invention serves especially advantageously to remove hydrogen from the primary circuits of the pressurized-water nuclear power plants.

For the purposes of this invention, the term "pressure energy reducer" means a device used to let out a pre-defined quantity of a steam-gas mixture under a high pressure drop between the pressure energy reducer inlet and outlet. Therefore, the purpose of the pressure energy reducer is to ensure the required total steam-gas mixture flow-rate from all its accumulation places to the collecting pipe with the required pressure drop at the pressure energy reducer. The sum of the mass flow-rates through all the throttling measurement orifice plates in the interconnecting pipes equals to the mass flow-rate of the steam-gas mixture including the weight of possibly condensed water going through the pressure energy reducer. Thus, the total quantity of the steam-gas mixture taken from the above-mentioned pressure system technology is dependent predominantly on the pressure loss of the pressure energy reducer, and also on the pressure losses of the individual throttling measurement orifice plates.

Especially advantageously, the pressure energy reducer in the equipment according to the invention is represented by a system of throttling measurement orifice plates sized so as to make the pressure drop in each of them subcritical, whereby ensuring a long service life of the pressure energy reducer. Even more advantageously, such an energy reducer is equipped with an integrated filter to prevent fouling the orifices in the throttling measurement orifice plates.

According to another advantageous embodiment of the equipment according to the invention, the filter is a separate element installed upstream the pressure energy reducer.

Thus, it is obvious that the throttling measurement orifice plate in the equipment according to the invention can, as a result of its size, let through a greater quantity of the steam-gas mixture than that taken from the steam-gas mixture accumulation place during the operation of this equipment. The resulting quantity of the steam-gas mixture taken from the individual accumulation places is given in each interconnecting pipe by a combination of the size of the respective throttling measurement orifice plate and of the pressure energy reducer which controls the total quantity of the steam-gas mixture taken off. However, as already mentioned above, if the interconnecting pipe is damaged downstream the place of installation of the throttling measurement orifice plate, the quantity of escaping steam is reduced as against a situation of the throttling measurement orifice plate being absent.

In its advantageous embodiment, the equipment according to the invention contains at least one closing valve installed in the collecting pipe to stop continual removal of the steam-gas mixture containing a non-condensable gas temporarily by closing the above-mentioned closing valve if the equipment according to the invention is to be shut down temporarily, for instance in any of abnormal operation modes or for repair. Especially advantageously, the embodiment of the steam-gas mixture removal equipment according to the invention contains a remotely closable valve making it possible to shut down the equipment according to the invention remotely, e.g. by means of an electric-driven valve or a pressure-controlled valve. In such embodiment, the equipment according to the invention also makes it possible to change the capacity of the equipment relatively easily by installing a closing valve upstream the pressure energy reducer, meaning in the steam-gas mixture flow direction, to shut down the pressure energy reducer and, by exchanging the respective throttling measurement orifice plates in the pressure energy reducer, for instance, to change the capacity of the steam-gas mixture removal equipment according to the invention or the replace damaged throttling measurement orifice plates in the pressure energy reducer, etc. Requirement to close the pressure system can also occur, for instance, in case of any of the emergency states in which the consumption of the electric heater in the pressurizer has to be reduced. In some embodiments of the equipment according to this invention, especially if pressure downstream the pressure energy reducer is higher than the atmospheric one, it may be advisable to install a second closing valve downstream the pressure energy reducer to allow dismantling the pressure energy reducer.

The number of steam-gas mixture accumulation places from which a non-condensable gas has to be removed is unlimited in substance; for instance, in the VVER-type pressurized water nuclear power plants, there are approximately seven points where the steam-gas mixture has to be removed. The capacity of the equipment according to the invention can be sized for any quantity of the steam-gas mixture to be removed; for instance, in the above-mentioned pressurized water nuclear power plant, it is approximately from 35 to 40 kg per hour depending on reactor power, and it can be changed as needed by modifying the pressure energy reducer during the shutdown thereof, e.g. by exchanging the throttling measurement orifice plates in the pressure energy reducer, by replacing the latter, etc.

In its advantageous embodiment, the steam-gas mixture removal equipment according to the invention has the throttling measurement orifice plates equipped with filters to prevent the orifices in the throttling measurement orifice plates from being clogged. The equipment for non-condensable gas removal according to the invention has the throttling measurement orifice plates installed always between the place of accumulation of the steam-gas mixture containing at least one non-condensable gas and the collecting pipe. Most advantageously, however, the throttling measurement orifice plates are installed as near as possible to the steam-gas mixture accumulation place to prevent steam condensation in the pipe upstream the throttling measurement orifice plate, while it is secured together with a suitably designed capacity of the pressure energy reducer that such a quantity of the steam-gas mixture is removed continually from the individual steam-gas mixture accumulation places through the respective throttling measurement orifice plates which corresponds with the steam-gas mixture quantity removed via the pressure energy reducer, which means that such a quantity of the steam-gas mixture goes through the pressure energy reducer which, on the one hand, ensures in essence the removal of all non-condensable gas generated in the individual steam-gas mixture accumulation places and, on the other, ensures the removal of the total quantity of the steam-gas mixture which went through the individual throttling measurement orifice plates, so that no excessive condensation of the steam-gas mixture occurs in the interconnecting pipe and in the collecting pipe upstream the pressure energy reducer.

The equipment according to the invention is of a robust design, and it is expected to provide a long lifetime.

The equipment according to the invention provides an advantage of continual removal of the steam-gas mixture and at least one non-condensable gas, especially advantageously hydrogen, which ensures that, for instance in nuclear power plants, the temperature of all components in the pressure system is kept near the one in the pressurizer, whereby preventing temperature cycling which affects component lifetime.

The equipment according to the invention has its individual parts arranged in a functionally correct order, i.e. one which ensures complete functionality of the whole system. They are the following parts in particular:
1) Steam-gas mixture removal points from the pressure system technology.
2) Properly sized throttling measurement orifice plates are located in the interconnecting pipes, advantageously as near as possible to the steam-gas mixture accumulation place where the mixture is removed from the technology; the throttling measurement orifice plate is advantageously equipped with a filter to secure it against clogging. Thus, as described above, the throttling measurement orifice plates ensure a uniform removal of the required quantity of the steam-gas mixture, i.e. a mixture of hydrogen and steam, from all the removal points irrespective of the different pressure losses of the downstream interconnecting pipe to the collecting pipe. The throttling measurement orifice plates may be located above the removal point in either a vertical or horizontal position. The advantage of installing the throttling measurement orifice plate in the equipment according to the invention as near as possible to the removal point is that, on the one hand, it prevents steam from condensing in the pipe upstream the throttling measurement orifice plate whereby preventing it from getting choked up with condensed steam and, on the other, in case the interconnecting pipe downstream the measurement orifice plate is damaged, the measurement orifice plate ensures a limited escape of the pressure medium, which means in a nuclear power plant a limited escape of steam from the primary circuit of the nuclear power plant. The throttling measurement orifice plate also ensures pressure separation of the removal points up- and downstream it, so that the steam-gas mixture having passed through the throttling measurement orifice plate cannot return to the removal point thanks to the pressure loss at the throttling measurement orifice plate. This will especially prevent partially cooled steam from returning back to the removal point and also reduce the quantity of condensed water in the collecting pipe upstream the pressure energy reducer.
3) The interconnecting pipe is inclined from the steam-gas mixture removal point in the pressure system technology to the pressure energy reducer to ensure letting out any potentially condensed steam from the interconnecting pipe if steam has condensed in the interconnecting pipe. This will prevent choking up the removal point and impossibility to remove the steam-gas mixture.
4) The collecting pipe for steam-gas mixture collection from the steam-gas mixture accumulation places is located lower than the lowest measurement orifice plate to ensure letting out condensed steam from the individual interconnecting pipes by sloping all the interconnecting pipes and the collecting pipe, whereby preventing choking up the throttling measurement orifice plates by the condensed liquid. The collecting pipe is inclined from the points of connection of the individual interconnecting pipe branches to the pressure energy reducer and, further, out of the equipment to ensure letting out condensed steam from the equipment according to the invention.
5) A closing valve, which can especially advantageously be equipped with an electric-driven actuator for a remote-control option, is installed advantageously upstream the pressure energy reducer in the direction of flow of the steam-gas mixture to close the pressure energy reducer.
6) The pressure energy reducer is installed at the end of the above-mentioned collecting pipe. This pressure energy reducer advantageously comprises of a system of throttling measurement orifice plates and, especially advantageously, it is equipped with a filter as described above. The individual throttling measurement orifice plates of said reducer are sized so as to make the pressure drop in each of them subcritical, whereby ensuring a long lifetime of the pressure energy reducer.
7) Another closing valve is installed advantageously downstream the pressure energy reducer to allow the option of separating the energy reducer from the connected pressure equipment, if installed.
8) Non-condensable gas removal from the equipment according to the invention for further processing or disposal. In a VVER-type pressurized water nuclear power plant, for instance, hydrogen is routed to a pressurizer relief tank from which, after cooling down, as a rule, it is transported to the hydrogen burning system in the auxiliary building.

The advantages in comparison with the present state of the art:
- The equipment being applied for features a specific sequence of individual components in the system and the use of measurement orifice plates advantageously with filters for uniform gas removal from the individual removal points.
- The aim of the equipment being submitted is to design and commission a system which removes undesirable gases safely and continually, whereby ensuring reaching a low number of temperature cycles in the whole pressure system and safer operation.
- The aim also is to use conventional components which are commonly used in nuclear power plants, which meet all the legislation requirements and do not require undertaking a long qualification process.

### Brief description of drawings

The system embodiment is described below with reference to the figures, in which:

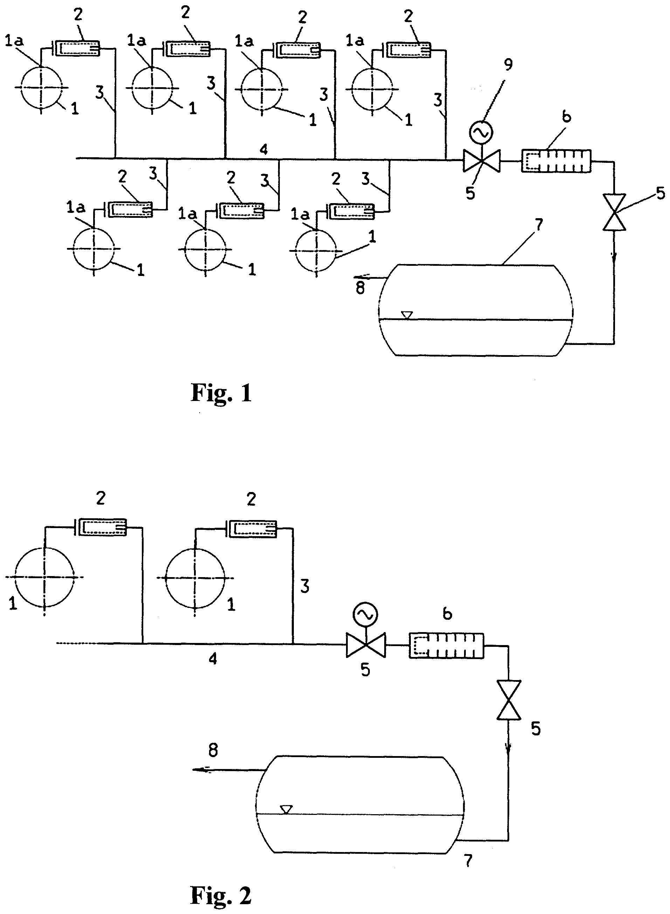

Fig. 1 presents a schematic representation of the equipment according to the invention with two non-condensable gas removal points, measurement orifice plates with integrated filters, a pressure energy reducer with a side outlet and two closing valves, and a pressurizer relief tank;
Fig. 2 presents a schematic representation of the equipment according to the invention with two non-condensable gas removal points, with throttling measurement orifice plates with integrated filters, a pressure energy reducer with a rear outlet, with two closing valves making it possible to inspect the pressure reducer with outlet to the pressurizer relief tank, and with further non-condensable gas processing, e.g. for burning;

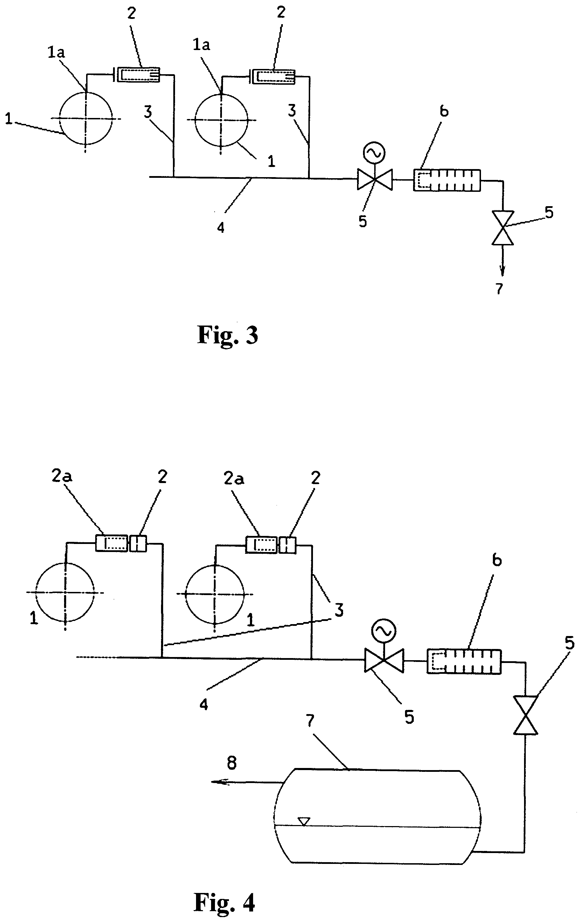

Fig. 3 presents a schematic representation of the equipment according to the invention with two non-condensable gas removal points, measurement orifice plates with integrated filters, a pressure energy reducer with a rear outlet, two closing valves and removal for further burning or other pressureless processing;
Fig. 4 presents a schematic representation of the equipment according to the invention with two non-condensable gas removal points, measurement orifice plates with separate upstream filters, a pressure energy reducer with a rear outlet, two closing valves and an inlet to the pressurizer relief tank;

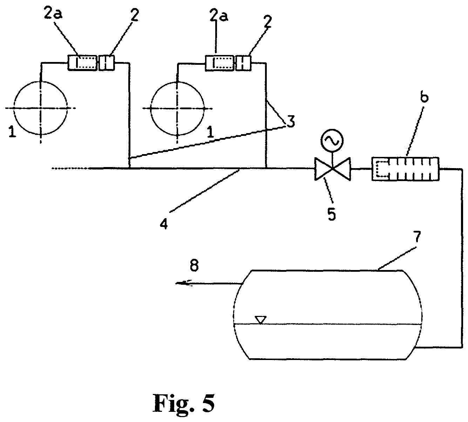

Fig. 5 presents a schematic representation of the equipment according to the invention with two non-condensable gas removal points, measurement orifice plates with separate upstream filters, a pressure energy reducer with a rear outlet, one closing valve and an outlet for the pressurizer relief tank;

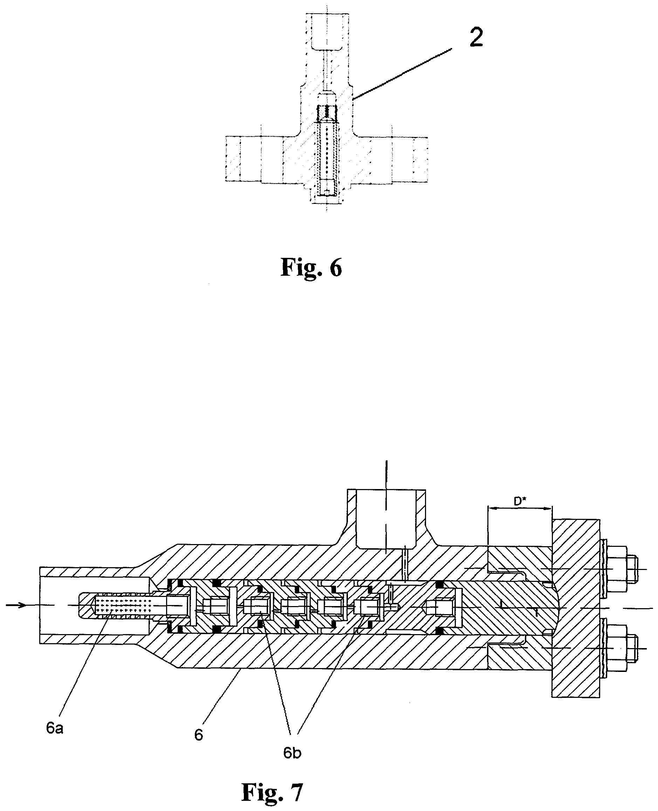

Fig. 6 presents one of the possible designs of a primary orifice plate with an integrated filter located at every steam-gas mixture removal point.
Fig. 7 presents a possible solution of a dismountable pressure energy reducer with a side outlet and an integrated filter which can be used in the equipment according to the invention and which, though not being subject to the invention, is usable advantageously in equipment according to other invention. The pressure energy reducer may be of different designs, including non-dismountable embodiments.

### Description of embodiments

To facilitate understanding the equipment for a removal of a steam-gas mixture containing at least one non-condensable gas according to this invention and the related method, examples are described below of its possible embodiments both for the steam-gas mixture removal method and for the steam-gas mixture removal equipment according to this invention. Although the present invention is described below by means of particular embodiments and with references to certain drawings, the invention is not restricted to the described embodiments but by the claims only. The drawings below are schematics only and are not intended to limit the invention to the embodiments depicted. For illustrative reasons, the drawings may show the sizes of some elements magnified and out of scale. The dimensions and the relative dimensions do not correspond to the actual reduction. Further, the terms "first", "second" and similar as they appear in the description and in the claims are used to distinguish between similar elements and are not necessarily meant to describe succession or temporality, space or superiority of one element over another, unless expressly stated. Moreover, although some of the embodiments of the invention described here contain some elements only but not the other ones, which, on the other hand, are contained in other embodiments, combinations of the elements from various embodiments are possible and form other embodiments than those described herein, which would be fully understandable to experts in the field.

### Example 1

Fig. 1 shows schematically one of the possible examples of embodiment of the equipment for removal of a steam-gas mixture containing at least one non-condensable gas according to this invention, installed in a pressure system technology which, in this case, is a nuclear power plant primary circuit pipeline and which generates a total quantity of approximately 35 to 40 kg/h of a steam-gas mixture, i.e. a mixture of steam and a non-condensable gas, being hydrogen in this embodiment example, where this total quantity is distributed evenly to seven places of accumulation of the steam-gas mixture. In Fig. 1, the equipment according to the invention is arranged as follows:
The steam-gas mixture consisting of a non-condensable gas, hydrogen in this case, and steam, is removed from the pressure system technology 1 always at the highest point of the pressure system technology 1 where the said non-condensable gas accumulates; in the present example, there are seven steam-gas mixture accumulation places 1a in the technology 1, which, in a nuclear power plant, for instance, is the pressurizer system where the non-condensable gas is separated from the pressure medium while simultaneously steam gets released to form the above-mentioned steam-gas mixture with the non-condensable gas to be removed. As already mentioned above, in this example of embodiment, the total quantity of the released steam-gas mixture containing a non-condensable gas in the technology 1 is approximately 35 to 40 kg/h. For the sake of clarity, it is pointed out that the above-mentioned pressure system technology 1 is not part of the equipment according to the invention. The equipment according to the invention is connected to the technology 1 in each place 1a of accumulation of the steam-gas mixture to be removed from technology 1, and contains interconnecting pipe 3, a throttling measurement orifice plate 2 always installed in the respective interconnecting pipe 3 downstream the point of its connection to the technology 1 in steam-gas mixture accumulation place 1a, a collecting pipe 4 connected to the interconnecting pipe 3 always downstream the throttling measurement orifice plates 2 in each branch of the interconnecting pipe 3, and a pressure energy reducer 6 installed in the collecting pipe 4. In this example of embodiment, as a rule, the same quantity of the steam-gas mixture is removed from each of the seven steam-gas mixture accumulation places 1a, i.e. approximately one seventh of the above-mentioned total quantity of the released steam-gas mixture, i.e. approximately 35 to 40 kg/h. In this example of embodiment, the throttling measurement orifice plate 2 is dismountable and it contains an integrated filter 2a to prevent the orifice regulating pressure loss in the throttling measurement orifice plate 2 from clogging. In this example, the throttling measurement orifice plate 2 is located as near as possible downstream the steam-gas mixture accumulation place 1a, i.e. downstream the removal point of the steam-gas mixture from the technology 1, in which each of the branches of the interconnecting pipe 3 is connected to the technology 1. The throttling measurement orifice plate 2 is located as near as possible to the removal point, i.e. to the steam-gas mixture accumulation place 1a, to prevent steam from condensing upstream the throttling measurement orifice plate in the interconnecting pipe 3 and subsequent choking up. Another advantage of this location of the throttling measurement orifice plate 2 is that it prevents steam from escaping in an excessive quantity in case of damage of the interconnecting pipe 3 or of the collecting pipe 4. In the equipment according to the invention as applicable in a nuclear power plant, for instance, the suitable diameter of the orifice of the throttling measurement orifice plate 2 in each branch of the interconnecting pipe 3 is approximately 1 mm, which corresponds to a pressure loss of approximately 7 kPa at a flow-rate of approximately 5 kg/h, and the pressure loss in the individual branches of the interconnecting pipe 3 at this flow-rate is from about 7 to 20 Pa, being in essence approximately 1000 to 350 times lower than the pressure loss of the throttling measurement orifice plate 2. Thus, it is ensured that all the interconnecting pipes 3 show an essentially identical pressure loss. With this proportion of pressure losses, therefore, the decisive member of the resulting pressure loss is only the throttling measurement orifice plate 2 and the required flow-rate of the steam-gas mixture of approximately 5kg/h through the throttling measurement orifice plate 2 is fulfilled at this pressure loss. As for the filter preventing the throttling measurement orifice plate from clogging, it has orifices of approximately 0.6 mm in diameter, whereby preventing clogging the orifice in the throttling measurement orifice plate. The throttling measurement orifice plate 2 is equipped advantageously with an integrated filter and is of a dismountable design to facilitate filter cleaning. The interconnecting pipe is inclined from the place 1a of steam-gas mixture accumulation/removal from the technology 1 to the collecting pipe 4, which is located lower than the lowest steam-gas mixture accumulation place 1a, and also sloped outwards the equipment to ensure removal of potentially condensed steam from the equipment according to the invention.

The collecting pipe 4 is used to remove the steam-gas mixture from the pressure system technology 1 and is sloped to the pressure energy reducer 6 to ensure drainage of any steam possibly condensed in the equipment according to the invention. The pressure energy reducer 6 is used to set the total required flow-rate through the collecting pipe 4 of the steam-gas mixture which flows into the pressure energy reducer 6 through all the throttling measurement orifice plates 2. Moreover, pressure is reduced considerably in the collecting pipe 4 at the pressure energy reducer 6 down to the pressure of the connected technology where the non-condensable gas is stored or processed otherwise. The pressure energy reducer 6 consists of a system of reducer throttling orifice plates sized so as to make the pressure drop in each of them subcritical, whereby preventing them from getting worn excessively. In this example of embodiment, the pressure energy reducer 6 is equipped with an integrated filter upstream the first of the system of the reducer orifice plates to prevent them from fouling with dirt contained in the steam-gas mixture. In this example of embodiment, the pressure energy reducer 6 is of a dismountable design with a side outlet. The embodiment proper of the pressure energy reducer 6 is not subject to this invention; for convenience, however, Fig. 7 shows an example of a possible embodiment of the pressure energy reducer 6. In this example of embodiment, for the design flow-rate of the steam-gas mixture of approximately 35-40 kg/h and for an inlet pressure of approximately 12-17 MPa in place 1a and outlet counter-pressure of approximately 0.1 MPa in the place of connection to the pressurizer relief tank 7, the pressure energy reducer 6 is designed with orifices in the reducer orifice plates at the individual stages of the pressure reducer from approximately 0.7 to 2.5 mm to ensure the required pressure drop, and the diameter of the holes in the filter is again approximately 0.6 mm, which is smaller than the smallest orifice of the reducer orifice plate. In every example of embodiment, the design of specific suitable orifices in the individual stages of the pressure energy reducer 6 is dependent on the composition of the steam-gas mixture, required flow-rate, inlet pressure, the number of orifice plates in the pressure energy reducer, and potential counter-pressure downstream the pressure energy reducer 6. Design of the inner layout of the pressure energy reducer 6 and calculation of diameters of the individual orifice plates, however, are not subject to this invention.

The pressure energy reducer 6 can be of various designs including non-dismountable embodiments not allowing changing the capacity, embodiments not containing filters, etc.

In this example of embodiment, closing valves 5 are installed in the collecting pipe 4 upstream and downstream the pressure energy reducer 6, and the closing valve 5 installed upstream the pressure energy reducer 6 is fitted with a remotely-controlled electric actuator 9. Installing a closing valve downstream the pressure energy reducer 6 is not always necessary; for instance, low pressure systems can only have one closing valve.

From the pressure energy reducer 6, the steam-gas mixture of reduced pressure is routed to the pressurizer relief tank 7 where the steam condenses and the non-condensable gas is let out for further processing, such as burning or storage, or to another facility/vessel designed to collect non-condensable gases.

The method of removal of a steam-gas mixture of at least one non-condensable gas and steam from a pressure system is as follows. The steam-gas mixture is generated by spontaneous separation of at least one non-condensable gas and steam from a medium in the pressure system technology 1, while the non-condensable gas generated by separation, which is lighter than steam, is collected at the highest points of the technology 1 which, in this case, are two steam-gas mixture accumulation places 1a, and is removed from these at least two steam-gas mixture accumulation places 1a to a collecting pipe through which it is let out for further processing.

The said method is conducted so that the steam-gas mixture is removed from all the steam-gas mixture accumulation places 1a by ensuring the required pressure loss between the steam-gas mixture removal place 1a and the collecting pipe 4 in each branch of the interconnecting pipe 3, which is at least 10 times higher than the pressure loss of the interconnecting pipe 3 with the highest pressure loss, and the throttling diameters of the individual throttling measurement orifice plates 2 are so designed to ensure the required flow-rates from the individual steam-gas mixture accumulation places 1a in the required proportion. In this example of embodiment, however, the quantity of steam-gas mixture generated in all the accumulation places 1a is equal, so all the throttling measurement orifice plates 2 are identical, as are also the pressure losses at the individual throttling measurement orifice plates 2, namely 7 kPa, which is minimally approximately 350 times more than the pressure loss of the interconnecting pipe with the highest pressure loss, which is 20 Pa. Further, drainage of any water generated by steam condensation is ensured from all the steam-gas mixture accumulation places 1a from which the steam-gas mixture is removed, to prevent choking the place 1a with water, and water is drained by gravity between any removal point, i.e. the steam-gas mixture accumulation place 1a, and the collecting pipe 4, after which the mixture of gas and steam is let out of the collecting pipe 4. It would be obvious to an expert that the number of non-condensable gas accumulation places 1a can be higher than two.

### Example 2

Fig. 2 shows schematically another example of embodiment of the equipment according to the invention, which only has two steam-gas mixture accumulation places 1a. In the first accumulation place 1a, a quantity of 10 kg/h of steam-gas mixture is generated, while in the other place 1a the quantity is 5 kg/h. In this example of embodiment, the pressure energy reducer 6 removes a total of 15 kg/h of steam-gas mixture with inlet pressure 10 MPa and outlet counter-pressure 0.5 MPa. Pressure loss in the first interconnecting pipe 3 is 10 Pa, while in the second interconnecting pipe 3 it is 20 Pa with the above-mentioned flow-rates, which is why throttling measurement orifice plates 2 with a pressure loss of 200 Pa as a minimum have to be installed in both interconnecting pipes 3. As the required sizes of the throttling orifices in the individual throttling measurement orifice plates 2 which should ensure the required proportion of the steam-gas mixture quantity passing through the individual throttling measurement orifice plates 2 correspond in essence to the square root of the required flow-rates of the individual throttling measurement orifice plates 2, then, in this case of embodiment, the proportion will be approximately 1.4:1, which means that in the branch with the required flow-rate 10 kg/h the suitable diameter of the throttling measurement orifice plate will be approximately 2.3 mm and in the branch with the required flow-rate 5 kg/h the suitable diameter of the throttling measurement orifice plate will be approximately 1.7 mm.

Otherwise, this example of embodiment is similar to that illustrated in Fig. 1, with only the pressure energy reducer 6 used here not being dismountable and being fitted with a rear outlet for connection to the collecting pipe 4 in which it is installed. The elements identical with the equipment shown in Fig. 1 are identified with the same figure marks and are not discussed again in this example of embodiment. In this example, the equipment according to the invention is only connected to two separate steam-gas mixture accumulation places 1a in the pressure system technology 1 where the same quantity of the steam-gas mixture is generated in either of them. However, the technology 1 is not part of the invention and there may be more points of connection, such as 3, 4, 5, 6, 7, etc. Again, it contains interconnecting pipe 3 where each of its branches has a measurement orifice plate 2, and each branch of the interconnecting pipe 3 is connected to a collecting pipe 4 to let out the steam-gas mixture. The collecting pipe 4 has a closing valve 5 controlled by an electric-driven actuator and, downstream (in the steam-gas mixture flow direction), a pressure energy reducer 6 fitted with a rear outlet for connection to the collecting pipe 4, with another, manually controlled closing valve installed downstream the pressure energy reducer to shut down the pressure energy reducer for its maintenance, etc. The steam-gas mixture is then let out of the pressure energy reducer to a pressurizer relief tank 7 where the steam remaining from the steam-gas mixture condenses and where the non-condensable gas is separated and let out through pipe 8 for further processing, storage or disposal.

### Example 3

Fig. 3 shows schematically another example of embodiment of the equipment according to the invention, which is similar to that shown in Fig. 2 and, therefore, is only described briefly below. This example of embodiment also has two steam-gas mixture accumulation places 1a only in which the same quantity of steam-gas mixture, i.e. 20 kg/h, is generated. In this example of embodiment, the pressure energy reducer 6 lets out 40 kg/h of steam-gas mixture in total with inlet pressure 13 MPa and outlet counter-pressure 0.1 MPa. Pressure loss is 5 Pa and 20 Pa in the first and in the second interconnecting pipe respectively; therefore, throttling measurement orifice plates must be installed in both interconnecting pipes with a minimum pressure loss of at least 200 Pa. As the required quantities of steam-gas mixture removed from both steam-gas mixture accumulation places are identical, identical throttling measurement orifice plates will be installed in this example of embodiment to ensure at least the required flow-rate of the steam-gas mixture from the individual accumulation places, i.e. the suitable diameter of the throttling measurement orifice plate in both branches is approximately 2.5 mm.

The elements identical with the equipment shown in Fig. 1 are identified with the same figure marks and are not discussed again in this example of embodiment. In this example, the equipment according to the invention is again connected to two separate steam-gas mixture accumulation places 1a only in the pressure system technology 1. However, the technology 1 is not part of the invention and there may be more points of connection, such as 3, 4, 5, 6, 7, etc. Again, it contains interconnecting pipe 3 where each of its branches has a measurement orifice plate 2, and each interconnecting pipe 3 is connected to a collecting pipe 4 to let out the steam-gas mixture. The collecting pipe 4 has a closing valve 5 and, downstream (in the steam-gas mixture flow direction), a pressure energy reducer 6 fitted with a rear outlet for connection to the collecting pipe 4. As the steam-gas mixture with a non-condensable gas is let out from the collecting pipe 4 directly into the atmosphere, no second closing valve is installed here as it is not needed.

### Example 4

Fig. 4 shows schematically another example of embodiment of the equipment according to the invention. This embodiment is essentially similar to that shown in Fig. 1 but it contains some different elements and, therefore, is described below in more detail. The identical elements are identified again with the same figure marks and are not discussed here further. The non-condensable gas forming a steam-gas mixture with steam in the technology 1 is always removed at the highest point of the technology 1 of the pressure system where this at least one non-condensable gas accumulates; in the present example, there are two places 1a and 1b of accumulation of a steam-gas mixture containing a non-condensable gas (the above-mentioned technology 1 is not part of the equipment), but it is obvious that there can also be more steam-gas mixture accumulation places in the technology 1, e.g. 3, 4, 5, 6, 7, etc. In this example of embodiment, the equipment according to the invention is connected to the said two places 1a, 1b and contains interconnecting pipe 3 in each branch, a measurement orifice plate 2b always installed in the given interconnecting pipe 3 as near as possible downstream the place 1a, in which the equipment according to the invention is connected to the technology 1 for the reasons already discussed in Example 1. In this example of embodiment, a separate filter 2a is installed between the place 1a, 1b and the throttling measurement orifice plate 2. In this example of embodiment, the throttling measurement orifice plate 2 is not dismountable, with the separate filter 2a only being dismountable. The interconnecting pipes 3 are entered into a collecting pipe 4 installed lower than the lowest steam-gas mixture accumulation place 1a, 1b and are sloped from the place 1a 1b to the collecting pipe 4 to prevent steam potentially condensed in the interconnecting pipe 3 from choking the places 1a, 1b where the steam-gas mixture is removed from the technology 1. A pressure energy reducer 6 is installed in the collecting pipe 4, with the collecting pipe 4 also being sloped from the place of connection of the interconnecting pipe to ensure drainage of potentially condensed steam out of the equipment. Closing valves 5 are installed in the collecting pipe up- and downstream the pressure energy reducer 6, and the closing valve 5 upstream the pressure energy reducer 6 is equipped with a remotely controlled actuator 9 to allow for equipment shutdown in case of an extraordinary state or failure, for instance. In this example of embodiment, the closing valve 5 downstream the pressure energy reducer 6 is not remotely controlled as it is closed manually only for works to be performed as necessary on the pressure energy reducer 6. From the pressure energy reducer 6, the steam-gas mixture of reduced pressure is routed to a pressurizer relief tank 7 where the steam condenses and the non-condensable gas is let out for further processing, such as burning or storage.

### Example 5

Another example of embodiment of the equipment according to the invention is shown schematically in Fig. 5. It is essentially identical with that illustrated in Fig. 4; because, in this case, the pressure system has a lower pressure of the medium and shutdown of the pressure energy reducer 6 is not required for repair or adjustment, no closing valve is installed between the pressure energy reducer 6 and the pressurizer relief tank 7.

The practical application of the proposed solution is intended especially for the VVER and PWR-type pressurized water nuclear power plants. A system of a similar design can be used in all technological processes where undesirable non-condensable gases are separated from liquid (or steam) upstream the offtake points. The proposed equipment increases safety of the assembly of the pressurizer main safety valves considerably as it reduces the thermal cycling of the whole system and lets out any hydrogen generated to a hydrogen burning system.

### Reference numerals:

- 1.: Pressure system technology from which non-condensable gas is removed
- 1a: Place of steam-gas mixture accumulation, connection point
- 2.: Throttling measurement orifice plate
- 2a: Filter
- 2b: Orifice of throttling measurement plate
- 3.: Interconnecting pipe
- 4.: Collecting pipe
- 5.: Closing valve
- 6.: Pressure energy reducer (in a welded or dismountable design)
- 6a: Filter
- 6b: Orifices of reducer plates
- 7.: Pressurizer relief tank
- 8.: Gas outlet for further processing (e.g., burning)
- 9.: Remotely controlled actuator (e.g., electric-driven)

## Claims

1. Method of removing a steam-gas mixture of at least one non-condensable gas, especially a hydrogen, and steam from a pressure system technology (1) in which the gas and the steam are separated spontaneously, wherein the separated gas is lighter than the steam and accumulates in at least two accumulation places (1a), from which said steam -gas mixture is removed and routed through interconnecting pipes (3) to a collecting pipe (4), through which it is let out for further processing, wherein
- a pressure loss between the accumulation place (1a) and the collecting pipe (4) is created, for each of the accumulation places (1a), said pressure loss being at least 10 times higher than a pressure loss of an interconnecting pipe (3) with the highest pressure loss,
- a required proportion of the steam-gas mixture to be removed from these accumulation places (1a) through said interconnecting pipes (3) is set for each of the accumulation places (1a) from which the steam-gas mixture has to be removed,
- a liquid generated by a steam condensation is removed from each of the accumulation places (1a) into the collecting pipe (4) to prevent the accumulation place (1a) from choking by such liquid wherein said liquid is drained by a height drop between any of the accumulation places (1a) and the collecting pipe (4); and,
- a total quantity of the steam-gas mixture, which is required to be removed from the technology (1), is set in the collecting pipe (4)wherein also such a pressure drop is set in the collecting pipe (4) allowing to remove the non-condensable gas from each accumulation place (1a),
- removing both the steam-gas mixture and the liquid from the condensed steam from the collecting pipe (4).

2. Method of removing a steam-gas mixture according to claim 1, **characterized by**
- for all the accumulation places (1a), the pressure loss which is created between the steam-gas mixture accumulation place (1a) and the collecting pipe (4) is at least 100 times higher than the pressure loss of the interconnecting pipe (3) with the highest pressure loss.

3. Method of removing a steam-gas mixture according to claim 1 or 2, **characterized in that** for all the accumulation places (1a) of the steam-gas mixture, a removal of the same quantity of

4. Device for a removal of a steam-gas mixture of at least one non-condensable gas and steam from a pressure system technology (1), the device comprising at least two accumulation places (1a) where the steam-gas mixture is accumulated, wherein each of the accumulation places (1a) is connected through an interconnecting pipe (3) with a collecting pipe (4) through which the steam-gas mixture is removed from the accumulation place (1a), wherein between each of the accumulation places (1a) and the collecting pipe (4) a throttling measurement orifice plate (2) is installed and connected onto the interconnecting pipe (3), where this throttling measurement orifice plate (2) is configured to provide an at least 10 times higher pressure loss than that of the interconnecting pipe (3) between the non-condensable gas accumulation place (1a) and the collecting pipe(4) in the interconnecting pipe (3) with the highest pressure loss, and, at the same time, each throttling measurement orifice plate (2) is configured to remove at least a quantity of the steam-gas mixture from the given steam-gas mixture accumulation place and also the required proportions of steam-gas mixture quantities from the individual steam-gas mixture accumulation places, wherein the collecting pipe(4) is installed lower than the lowest non-condensable accumulation place (1a) and the interconnecting pipes (3) are sloped to it to prevent the accumulation place (1a) from being choked by condensed steam, and wherein the collecting pipe(4) is equipped with a pressure energy reducer (6) configured to let out a pre-defined total quantity of the steam-gas mixture from all the places (1a) of its accumulation through the individual throttling measurement orifice plates (2) wherein this total quantity is pre-defined such, that essentially the whole quantity of the produced non-condensable gas is removed from the technology (1).

5. Device for a removal of a steam-gas mixture according to claim 4, **characterized in that** the individual throttling measurement orifice plates (2) are designed to create at least 100 times higher pressure losses or, more advantageously, at least 300 times higher pressure losses between the steam-gas mixture accumulation place (1a) and the collecting pipe (4) than that in the interconnecting pipe (3) with the highest pressure loss.

6. Device for a removal of a steam-gas mixture according to claim 4, **characterized in that** each of the throttling measurement orifice plates (2) is fitted with a filter (2a) to prevent it from being clogged.

7. Device for a removal of a steam-gas mixture according to claim 6, **characterized in that** the throttling measurement orifice plate (2) and the filter (2a) are integrated in a single dismountable unit.

8. Device for a removal of a steam-gas mixture according to any of claims 4 to 7, **characterized in that** the pressure energy reducer (6) is fitted with a filter (6a) to prevent it from being clogged.

9. Device for a removal of a steam-gas mixture according to any of claims 4 to 8, **characterized in that** the pressure system is the primary circuit of a pressurized water nuclear power plant.

10. Device for a removal of a steam-gas mixture according to any of claims 4 to 9, **characterized in that** a closing valve (5) is installed in the collecting pipe (4) up- and downstream the pressure energy reducer (6).

11. Device for a removal of a steam-gas mixture according to claim 10, **characterized in that** at least one closing valve (5) upstream the pressure energy reducer (6) is equipped with a remotely controlled actuator (9).

## Patentansprüche

1. Verfahren zum Entfernen eines Dampf-Gas-Gemisches aus mindestens einem nicht kondensierbaren Gas, insbesondere Wasserstoff, und Dampf aus einer Drucksystemtechnologie (1), in der das Gas und der Dampf spontan getrennt werden, wobei das getrennte Gas leichter als der Dampf ist und sich an mindestens zwei Ansammlungsstellen (1a) ansammelt, aus denen das Dampf-Gas-Gemisch entfernt und durch Verbindungsrohre (3) in ein Sammelrohr (4) geleitet wird, durch das es zur weiteren Verarbeitung abgeführt wird, wobei
- ein Druckverlust zwischen der Ansammlungsstelle (1a) und dem Sammelrohr (4) für jede der Ansammlungsstellen (1a) erzeugt wird, wobei dieser Druckverlust mindestens 10 Mal höher ist als der Druckverlust des Verbindungsrohrs (3) mit dem höchsten Druckverlust,
- ein erforderlicher Anteil des Dampf-Gas-Gemisches, der aus diesen Ansammlungsstellen (1a) entfernt werden muss, durch die Verbindungsrohre (3) für jede der Ansammlungsstellen (1a) eingestellt wird, aus denen das Dampf-Gas-Gemisch entfernt werden muss,
- eine durch Dampfkondensation erzeugte Flüssigkeit aus jeder der Ansammlungsstellen (1a) in das Sammelrohr (4) entfernt wird, um zu verhindern, dass die Ansammlungsstelle (1a) durch diese Flüssigkeit verstopft wird, wobei die Flüssigkeit durch einen Höhenunterschied zwischen einer der Ansammlungsstellen (1a) und dem Sammelrohr (4) abgeleitet wird; und,
- eine Gesamtmenge des Dampf-Gas-Gemisches, die aus der Technologie (1) entfernt werden muss, im Sammelrohr (4) festgelegt wird, wobei auch ein solcher Druckabfall im Sammelrohr (4) festgelegt wird, der es ermöglicht, das nicht kondensierbare Gas aus jeder Ansammlungsstelle (1a) zu entfernen,
- sowohl das Dampf-Gas-Gemisch als auch die Flüssigkeit aus dem kondensierten Dampf aus dem Sammelrohr (4) entfernt wird.

2. Verfahren zum Entfernen eines Dampf-Gas-Gemisches nach Anspruch 1, **dadurch gekennzeichnet, dass**
- für alle Ansammlungsstellen (1a) der erzeugte Druckverlust zwischen der Ansammlungsstelle des Dampf-Gas-Gemisches (1a) und dem Sammelrohr (4) mindestens 100 Mal höher ist als der Druckverlust des Verbindungsrohrs (3) mit dem höchsten Druckverlust.

3. Verfahren zum Entfernen eines Dampf-Gas-Gemisches nach Anspruch 1 oder 2, **dadurch gekennzeichnet, dass** für alle Ansammlungsstellen (1a) des Dampf-Gas-Gemisches die Entfernung der gleichen Menge des Dampf-Gas-Gemisches für jede dieser Ansammlungsstellen (1a) bereitgestellt wird.

4. Vorrichtung zur Entfernung eines Dampf-Gas-Gemisches aus mindestens einem nicht kondensierbaren Gas und Dampf aus einer Drucksystemtechnologie (1), wobei die Vorrichtung mindestens zwei Ansammlungsstellen (1a) umfasst, an denen sich das Dampf-Gas-Gemisch ansammelt, wobei jede der Ansammlungsstellen (1a) über ein Verbindungsrohr (3) mit einem Sammelrohr (4) verbunden ist, durch das das Dampf-Gas-Gemisch aus der Ansammlungsstelle (1a) entfernt wird, wobei zwischen jeder der Ansammlungsstellen (1a) und dem Sammelrohr (4) eine Drossel-Messblende (2) installiert und mit dem Verbindungsrohr (3) verbunden ist, wobei diese Drossel-Messblende (2) so konfiguriert ist, dass sie einen mindestens 10 Mal höheren Druckverlust als den des Verbindungsrohrs (3) zwischen der Ansammlungsstelle des nicht kondensierbaren Gases (1a) und dem Sammelrohr (4) im Verbindungsrohr (3) mit dem höchsten Druckverlust erzeugt, und gleichzeitig ist jede Drossel-Messblende (2) so konfiguriert, dass sie mindestens eine Menge des Dampf-Gas-Gemisches aus der jeweiligen Ansammlungsstelle des Dampf-Gas-Gemisches entfernt und auch die erforderlichen Mengenanteile des Dampf-Gas-Gemisches aus den einzelnen Ansammlungsstellen, wobei das Sammelrohr (4) tiefer als die niedrigste Ansammlungsstelle des nicht kondensierbaren Gases (1a) installiert ist und die Verbindungsrohre (3) zu diesem geneigt sind, um zu verhindern, dass die Ansammlungsstelle (1a) durch kondensierten Dampf verstopft wird, und wobei das Sammelrohr (4) mit einem Druckenergieminderer (6) ausgestattet ist, der so konfiguriert ist, dass er eine vordefinierte Gesamtmenge des Dampf-Gas-Gemisches aus allen Ansammlungsstellen (1a) durch die einzelnen Drossel-Messblenden (2) abgibt, wobei diese Gesamtmenge so vordefiniert ist, dass im Wesentlichen die gesamte Menge des erzeugten nicht kondensierbaren Gases aus der Technologie (1) entfernt wird.

5. Vorrichtung zur Entfernung eines Dampf-Gas-Gemisches nach Anspruch 4, **dadurch gekennzeichnet, dass** die einzelnen Drossel-Messblenden (2) so ausgelegt sind, dass sie mindestens 100 Mal höhere Druckverluste oder, vorteilhafter, mindestens 300 Mal höhere Druckverluste zwischen der Ansammlungsstelle des Dampf-Gas-Gemisches (1a) und dem Sammelrohr (4) erzeugen, als dies im Verbindungsrohr (3) mit dem höchsten Druckverlust der Fall ist.

6. Vorrichtung zur Entfernung eines Dampf-Gas-Gemisches nach Anspruch 4, **dadurch gekennzeichnet, dass** jede der Drossel-Messblenden (2) mit einem Filter (2a) ausgestattet ist, um zu verhindern, dass sie verstopft wird.

7. Vorrichtung zur Entfernung eines Dampf-Gas-Gemisches nach Anspruch 6, **dadurch gekennzeichnet, dass** die Drossel-Messblende (2) und der Filter (2a) in einer einzigen demontierbaren Einheit integriert sind.

8. Vorrichtung zur Entfernung eines Dampf-Gas-Gemisches nach einem der Ansprüche 4 bis 7, **dadurch gekennzeichnet, dass** der Druckenergieminderer (6) mit einem Filter (6a) ausgestattet ist, um zu verhindern, dass er verstopft.

9. Vorrichtung zur Entfernung eines Dampf-Gas-Gemisches nach einem der Ansprüche 4 bis 8, **dadurch gekennzeichnet, dass** das Drucksystem der Primärkreislauf eines Druckwasserreaktors eines Kernkraftwerks ist.

10. Vorrichtung zur Entfernung eines Dampf-Gas-Gemisches nach einem der Ansprüche 4 bis 9, **dadurch gekennzeichnet, dass** ein Absperrventil (5) im Sammelrohr (4) vor und hinter dem Druckenergieminderer (6) installiert ist.

11. Vorrichtung zur Entfernung eines Dampf-Gas-Gemisches nach Anspruch 10, **dadurch gekennzeichnet, dass** mindestens ein Absperrventil (5) vor dem Druckenergieminderer (6) mit einem fernsteuerbaren Antrieb (9) ausgestattet ist.

## Revendications

1. Procédé de retrait d'un mélange vapeur-gaz d'au moins un gaz non condensable, en particulier l'hydrogène, et de vapeur d'eau en provenance d'une technologie (1) à système de pression dans lequel le gaz et la vapeur sont séparés spontanément, le gaz séparé étant plus léger que la vapeur et s'accumulant dans au moins deux emplacements d'accumulation (1a), à partir desquels ledit mélange vapeur-gaz est retiré et acheminé par des tuyaux d'interconnexion (3) dans un tuyau de collecte (4), à travers lequel il est mis à disposition pour un traitement ultérieur, **dans lequel**
- une perte de pression entre l'emplacement d'accumulation (1a) et le tuyau de collecte (4) est créée, pour chacun des emplacements d'accumulation (1a), ladite perte de pression étant au moins 10 fois plus élevée qu'une perte de pression d'un tuyau d'interconnexion (3) avec la perte de pression la plus élevée ;
- une proportion requise du mélange vapeur-gaz à retirer de ces emplacements d'accumulation (1a) par lesdits tuyaux d'interconnexion (3) est établie pour chacun des emplacements d'accumulation (1a) à partir desquels le mélange vapeur-gaz doit être retiré ;
- un liquide généré par une condensation de vapeur est retiré de chacun des emplacements d'accumulation (1a) dans le tuyau de collecte (4) pour éviter que l'emplacement d'accumulation (1a) ne soit engorgé par un tel liquide, ledit liquide étant drainé par une chute de hauteur entre n'importe lequel des emplacements d'accumulation (1a) et le tuyau de collecte (4) ; et
- une quantité totale du mélange vapeur-gaz, qui doit être retiré du procédé (1), est établie dans le tuyau de collecte (4), une telle chute de pression étant également établie dans le tuyau de collecte (4) permettant de retirer le gaz non condensable à partir de chaque emplacement d'accumulation (1a) ;
- retirer à la fois le mélange vapeur-gaz et le liquide provenant de la vapeur condensée à partir du tuyau de collecte (4).

2. Procédé de retrait d'un mélange vapeur-gaz selon la revendication 1, **caractérisé par le fait que**
- pour tous les emplacements d'accumulation (1a), la perte de pression qui est créée entre l'emplacement d'accumulation de mélange vapeur-gaz (1a) et le tuyau de collecte (4) est au moins 100 fois plus élevée que la perte de pression du tuyau d'interconnexion (3) avec la perte de pression la plus élevée.

3. Procédé de retrait d'un mélange vapeur-gaz selon l'une des revendications 1 ou 2, **caractérisé par le fait, que** pour tous les emplacements d'accumulation (1a) du mélange vapeur-gaz, un retrait de la même quantité du mélange vapeur-gaz est prévu pour chacun desdits emplacements d'accumulation (1a).

4. Dispositif de retrait d'un mélange vapeur-gaz d'au moins un gaz non condensable et de vapeur en provenance d'une technologie à système de pression (1), le dispositif comprenant au moins deux emplacements d'accumulation (1a) où le mélange vapeur-gaz est accumulé, dans lequel chacun des emplacements d'accumulation (1a) est relié par un tuyau d'interconnexion (3) à un tuyau de collecte (4) à travers lequel le mélange vapeur-gaz est retiré de l'emplacement d'accumulation (1a), dans lequel, entre chacun des emplacements d'accumulation (1a) et le tuyau de collecte (4), une plaque à orifice de mesure d'étranglement (2) est installée et reliée sur le tuyau d'interconnexion (3), où cette plaque à orifice de mesure d'étranglement (2) est configurée pour fournir une perte de pression au moins 10 fois plus élevée que celle du tuyau d'interconnexion (3) entre l'emplacement d'accumulation de gaz non condensable (1a) et le tuyau de collecte (4) dans le tuyau d'interconnexion (3) avec la perte de pression la plus élevée, et, en même temps, chaque plaque à orifice de mesure d'étranglement (2) est configurée pour retirer au moins une quantité du mélange vapeur-gaz provenant de l'emplacement d'accumulation de mélange vapeur-gaz donné et également les proportions requises de quantités de mélange vapeur-gaz provenant des emplacements d'accumulation individuels de mélange vapeur-gaz, dans lequel le tuyau de collecte (4) est installé plus bas que l'emplacement d'accumulation non condensable le plus bas (1a) et les tuyaux d'interconnexion (3) sont inclinés vers lui pour empêcher l'emplacement d'accumulation (1a) d'être engorgé par la vapeur condensée, et dans lequel le tuyau de collecte (4) est équipé d'un réducteur d'énergie de pression (6) configurer pour mettre à disposition une quantité totale prédéfinie du mélange vapeur-gaz provenant de tous les emplacements (1a) de son accumulation à travers les plaques à orifice de mesure d'étranglement individuelles (2), dans lequel cette quantité totale est prédéfinie de telle manière que sensiblement la quantité totale du gaz non condensable produit est retirée du technologie (1).

5. Dispositif de retrait d'un mélange vapeur-gaz selon la revendication 4, **caractérisé par le fait que** les plaques à orifice de mesure d'étranglement individuelles (2) sont conçues pour créer des pertes de pression au moins 100 fois plus élevées ou, plus avantageusement, au moins 300 fois plus élevées entre l'emplacement d'accumulation de mélange vapeur-gaz (1a) et le tuyau de collecte (4) que celles dans le tuyau d'interconnexion (3) avec la perte de pression la plus élevée.

6. Dispositif de retrait d'un mélange vapeur-gaz selon la revendication 4, **caractérisé par le fait que** chacune des plaques à orifice de mesure d'étranglement (2) est équipée d'un filtre (2a) pour l'empêcher d'être obstruée.

7. Dispositif de retrait d'un mélange vapeur-gaz selon la revendication 6, **caractérisé par le fait que** la plaque à orifice de mesure d'étranglement (2) et le filtre (2a) sont intégrés dans une seule unité démontable.

8. Dispositif de retrait d'un mélange vapeur-gaz selon l'une quelconque des revendications 4 à 7, **caractérisé par le fait que** le réducteur d'énergie de pression (6) est équipé d'un filtre (6a) pour l'empêcher d'être obstrué.

9. Dispositif de retrait d'un mélange vapeur-gaz selon l'une quelconque des revendications 4 à 8, **caractérisé par le fait que** le système de pression est le circuit primaire d'une centrale nucléaire à eau pressurisée.

10. Dispositif de retrait d'un mélange vapeur-gaz selon l'une quelconque des revendications 4 à 9, **caractérisé par le fait qu'**une soupape de fermeture (5) est installée dans le tuyau de collecte (4) en amont et en aval du réducteur d'énergie de pression (6).

11. Dispositif de retrait d'un mélange vapeur-gaz selon la revendication 10, **caractérisé par le fait qu'**au moins une soupape de fermeture (5) en amont du réducteur d'énergie de pression (6) est équipée d'un actionneur télécommandé (9).
